# EUROPÄISCHE PATENTSCHRIFT

(11) **EP 0 576 783 B1**
(45) Veröffentlichungstag und Bekanntmachung des Hinweises auf die Patenterteilung: **13.12.1995**
(21) Anmeldenummer: 93101255.3
(22) Anmeldetag: 28.01.1993
(51) Int. Cl.: B01D 45/06, F01M 13/04, B01D 50/00

(54) **Flüssigkeitsabscheider**
Liquid separator
Séparateur de liquide

(30) Priorität: 03.07.1992 DE 4221885
(43) Veröffentlichungstag der Anmeldung: 05.01.1994
(73) Patentinhaber: Firma Carl Freudenberg, 69469 Weinheim (DE)
(72) Erfinder: Krause, Wolfgang, W-6923 Waibstadt 2 (DE); Döhring, Klaus, W-8000 München 71 (DE); Heinrich, Karl, Dr., W-6943 Birkenau (DE); Kurr, Klaus, Dr., W-6940 Weinheim (DE)

(56) Entgegenhaltungen:
- EP-A- 0 353 903
- DE-A- 2 928 283
- DE-A- 4 037 983
- US-A- 4 269 607

## Beschreibung

Die Erfindung betrifft einen Flüssigkeitsabscheider zum Abscheiden von Flüssigkeit aus mit Flüssigkeitsbestandteilen durchsetzten Gasen, umfassend ein Gehäuse mit zumindest drei Öffnungen, wobei die Öffnungen durch eine rohrförmige Eintrittsöffnung und zwei rohrförmige Austrittsöffnungen gebildet sind, die strömungsleitend miteinander verbunden sind, wobei in Strömungsrichtung zwischen der Ein- und den Austrittsöffnungen zumindest eine Abscheidevorrichtung angeordnet ist, wobei eine der Austrittsöffnungen im wesentlichen nur von abgeschiedener Flüssigkeit und die andere Austrittsöffnung im wesentlichen nur von flüssigkeitsbefreitem Gas durchströmbar ist und wobei ein Mantelrohr ein Innenrohr mit allseitigem Abstand außenseitig umschließt.

Ein solcher Flüssigkeitsabscheider ist aus der US 4,269,607 bekannt und gelangt als externer Ölabscheider für Verbrennungskraftmaschinen zur Anwendung. Die mit Flüssigkeitsbestandteilen angereicherten Gase treten durch eine Eintrittsöffnung in den Flüssigkeitsabscheider ein und passieren zumindest eine Abscheidevorrichtung, die aus einem Filtermaterial besteht, beispielsweise aus einem Drahtwoll- oder Drahtmattengeflecht oder einer Vliesstoffscheibe. Ein Großteil der Flüssigkeitsbestandteile werden danach aufgrund ihrer Trägheit an einer in Strömungsrichtung folgenden Prallwand abgeschieden, wobei die Rückführung der abgeschiedenen Flüssigkeit durch eine der Austrittsöffnungen in den Ölsumpf der Verbrennungskraftmaschine und das von der Flüssigkeit befreite Gas durch die andere Austrittsöffnung abgeführt und der Verbrennungskraftmaschine zur Gemischbildung wieder zugeführt wirt. Dabei ist allerdings zu beachten, daß die Abscheidegrade wenig zufriedenstellend sind und die vorbekannten Ölabscheider bei niedrigen Umgebungstemperaturen von weniger als - 20°C zum Vereisen neigen. Die Gebrauchseigenschaften sind daher wenig zufriedenstellen.

Der Erfindung liegt die Aufgabe zugrunde, einen Flüssigkeitsabscheider der vorbekannten Art derart weiterzuentwickeln, daß sich wesentliche verbesserte Abscheidegrade bei geringen Druckverlusten ergeben und die Vereisungsgefahr bei niedrigen Umgebungstemperaeturen weitgehend verhindert wird.

Diese Aufgabe wird erfindungsgemäß mit Anspruch 1 gelöst. Auf vorteilhafte Ausgestaltungen nehmen die Unteransprüche Bezug.

Im Rahmen der vorliegenden Erfindung ist es vorgesehen, daß die Abscheidevorrichtung auf der der Austrittsöffnung zugewandten Seite vom Innenrohr umschlossen ist, daß das Innenrohr einerseits strömungsleitend mit der Eintrittsöffnung verbunden ist und andererseits der Austrittsöffnungen für die abgeschiedene Flüssigkeit zugeordnet ist und daß das Gehäuse mit der Eintrittsöffnung und den Austrittsöffnungen als Mantelrohr ausgebildet ist.

Hierbei ist von Vorteil, daß die guten Gebrauchseigenschaften des Flüssigkeitsabscheiders weitgehend unabhängig von den äußeren Einflüssen sind. Auch bei tiefen Umgebungstemperaturen zeichnet sich der erfindungsgemäße Flüssigkeitsabscheider durch gute Abscheidegrade bei niedrigen Druckverlusten aus und die Vereisungsgefahr kann dadurch auf ein Minimum reduziert werden. Durch den Rohr-in-Rohr-Aufbau ergibt sich eine gute Isolierung des strömungsleitenden Innenrohrs und der vereisungsgefährdeten Abscheidevorrichtung durch das Mantelrohr, das von den Außentemperaturen unmittelbar beaufschlagt ist. Das Innenrohr wird im wesentlichen von dem mit Flüssigkeitsbestandteilen angereicherten Gas und anschließend von abgeschiedener Flüssigkeit durchströmt, während das Mantelrohr im Anschluß an die Flüssigkeitsabscheidung im wesentlichen nur von einem gasförmigen Medium durchströmbar ist.

Im Hinblick auf eine vorteilhafte Ausgestaltung des Flüssigkeitsabscheiders kann die Rückführung der abgeschiedenen Flüssigkeit durch die entsprechende Austrittsöffnung in Strömungsrichtung stattfinden, wobei die Austrittsöffnung bevorzugt derart angeordnet ist, daß die abgeschiedene Flüssigkeit zusätzlich von der Gravitationskraft beaufschlagbar ist.

Das Mantelrohr kann im wesentlichen T-förmig gestaltet sein, wobei die Eintrittsöffnung zwischen zwei einander im wesentlichen gegenüberliegenden Austrittsöffnungen angeordnet ist. Hierbei ist von Vorteil, daß die Trennung des mit Flüssigkeitsbestandteilen durchsetzten Gases einfach vorgenommen werden kann und die voneinander getrennten Medien aus dem Flüssigkeitsabscheider problemlos abgeführt werden können. Ein derart gestaltetes Mantelrohr ist in fertigungstechnischer und wirtschaftlicher Hinsicht vorteilhaft.

Das Innenrohr kann im wesentlichen L-förmig gestaltet und als Prallwand ausgebildet sein. Durch die im wesentlichen rechtwinkelige Umleitung des mit Flüssigkeitsbestandteilen durchsetzten Gases können hohe Abscheidegrade erreicht werden. Die einfache geometrische Gestalt des Innenrohrs ist in fertigungstechnischer Hinsicht von hervorzuhebender Bedeutung. Die Kombination von T-förmigen Mantelrohr und L-förmigem Innenrohr bedingt eine wirtschaftliche Herstellbarkeit.

Gemäß einer vorteilhaften Ausgestaltung können das Mantelrohr und das Innenrohr als einstückig ineinander übergehendes Formteil ausgebildet sein, das aus einem zähharten, gegen das Strömungsmedium resistenten Kunststoff besteht. Neben einem geringen Gewicht des Flüssigkeitsabscheiders können große Stückzahlen wirtschaftlich günstig hergestellt werden. In Abhängigkeit von den jeweiligen Gegebenheiten des Anwendungsfalls kann ein daran angepaßter Kunststoff zur Anwendung gelangen. Davon abweichende Materialien, wie z. B. metallische Werkstoffe können ebenfalls Verwendung finden.

Ist zumindest das Mantelrohr als Formteil ausgebildet, ist es besonders einfach, die Eintrittsöffnung und die beiden Austrittsöffnungen als Befestigungsflansche auszubilden, die mit anschließenden Leitungen dichtend in Eingriff bringbar sind. Beispielsweise können im Bereich der Eintrittsöffnung und der Austrittsöffnungen einstückig an das Mantelrohr angeformte, umlaufende Ringwulste vorgesehen sein, über die beispielsweise Leitungen aus gummielastischem Werkstoff übergeschoben und gegebenenfalls durch eine Schlauchklemmen auf der dem Mantelrohr zugewandten Seite befestigbar sind. Nach einer anderen Ausgestaltung kann der Befestigungsflansch derart ausgebildet sein, daß er Durchbrechungen aufweist, die von Befestigungsschrauben durchdrungen an einem Maschinenteil festgelegt werden können. Auf der dem Maschinenteil zugewandten Seite kann der Befestigungsflansch beispielsweise mit einer nutförmigen Vertiefung versehen sein, in die ein Dichtring zur statischen Abdichtung einlegbar ist.

Zur Verbesserung des Abscheidegrads des Flüssigkeitsabscheiders kann im Bereich der Eintrittsöffnung ein Vorabscheider angeordnet sein, der aus einem strömungsdurchlässigen Gittergeflecht besteht, das von einem Haltering umschlossen ist und den Eintrittsquerschnitt der Eintrittsöffnung vollständig überdeckt und daß der Haltering in die Eintrittsöffnung einschnappbar ist. Hierbei ist von Vorteil, daß der Vorabscheider bei Verstopfung des Gittergeflechts leicht ausgetauscht werden kann. Der formstabile Haltering kann beispielsweise aus einem zähhartem Kunststoff bestehen und vorteilhafterweise den gleichen Wärmeaustauschkoeffizient aufweisen, wie der Rohrabschnitt, der die Eintrittsöffnung umschließt.

Die Hauptabscheidevorrichtung kann durch eine austauschbare Abscheidepatrone gebildet sein, die vom Innenrohr auf der der Austrittsöffnung, die im wesentlichen nur von Flüssigkeit durchströmbar ist, zugewandten Seite kraft- und/oder formschlüssig umschlossen ist und daß die Abscheidepatrone durch einen durchbrochenen, rohrförmigen Käfig gebildet ist, der ein strömungsdurchlässiges Gittergeflecht umgreift.

Das Gittergeflecht von Vorabscheider und Abscheidepatrone kann beispielsweise durch zumindest eine Drahtmatten-, Drahtwollder Vliesstoffscheibe gebildet sein. Ein metallisches Gittergeflecht, das einen Filtervliesstoff außenseitig umschließt, ist ebenfalls denkbar. Bei Verwendung derartiger Gittergeflechte ist von Vorteil, daß sich bei geringen Druckverlusten sehr gute Abscheidegrade erzielen lassen. Mit zunehmender Gebrauchsdauer und daraus resultierender zunehmender Verstopfung des Gittergeflechts kann dieses durch die austauschbare Abscheidepatrone leicht erneuert werden. Dabei kann die Abscheidepatrone mit dem Gittergeflecht insgesamt ersetzt werden oder im Hinblick auf die vorteilhafte Wiederverwertung des durchbrochenen Käfigs nur das Gittergeflecht ersetzt werden.

Die Abscheidepatrone kann das Innenrohr in Richtung der Austrittsöffnung kegelstumpfförmig überragen, wobei der Käfig in diesem Bereich durch Flüssigkeitsleitschienen gebildet ist.

Der Kegelstumpf weist in Richtung der im wesentlichen nur von abgeschiedener Flüssigkeit durchströmten Austrittsöffnung einen Außendurchmesser auf, der vom Innendurchmesser der Austrittsöffnung im Bereich seiner Stirnseite umfangsseitig umschlossen ist. Die abgeschiedene Flüssigkeit wird dadurch besonders rasch und vollständig durch die Austrittsöffnung abgeführt, ohne daß die Flüssigkeitsbestandteile das angrenzende Mantelrohr übermäßig benetzen.

Zum leichten Austauschen der Abscheidepatrone kann die Austrittsöffnung einstückig mit einem Deckel ausgebildet sein, der beispielsweise durch einen Schnapp- oder Bajonettverschluß dichtend am Mantelrohr befestigt ist. In diesem Falle kann die Stirnseite der kegelstumpfförmigen Abscheidepatrone als Zentrierung des Deckels genutzt werden. Eine gute Zugänglichkeit der Abscheidepatrone und ein einfaches Austauschen innerhalb kürzester Zeit sind durch diese Ausgestaltung gewährleistet.

Der Flüssigkeitsabscheider kann als Ölabscheider für Verbrennungskraftmaschinen Verwendung finden.

Danach kann es vorgesehen sein, daß die der Abscheidepatrone zugewandte, im wesentlichen nur von abgeschiedener Flüssigkeit durchströmbare Austrittsöffnung als Leitungsanschluß für eine in den Ölsumpf der Verbrennungskraftmaschine führende Öl-Rückführungsleitung und die im wesentlichen nur von flüssigkeitsbefreitem Gas durchströmbare Austrittsöffnung als Leitungsanschluß für eine in den Luftfilter der Verbrennungskraftmaschine führende Gas- Rückführungsleitung ausgebildet ist. Die Gas-Rückführungsleitung kann nach einer anderen Ausgestaltung auch in das Saugrohr der Verbrennungskraftmaschine geführt sein. Die Öl-Rückführungsleitung kann beispielsweise durch einen flexiblen Schlauch oder einen Syphon gebildet sein, wobei das abgeschiedene Öl vorteilhafterweise unterhalb des Ölspiegels in die Ölwanne geführt wird. Hierbei ist von Vorteil, daß das Öl nicht aufschäumt und nicht zu Beeinträchtigungen der Schmierung der Verbrennungskraftmaschine führt. Die von Flüssigkeitsbestandteilen gereinigte Luft kann beispielsweise entgegen der Gravitationskraft abgeführt und über einen ebenfalls flexiblen Schlauch dem Luftfilter zugeleitet werden.

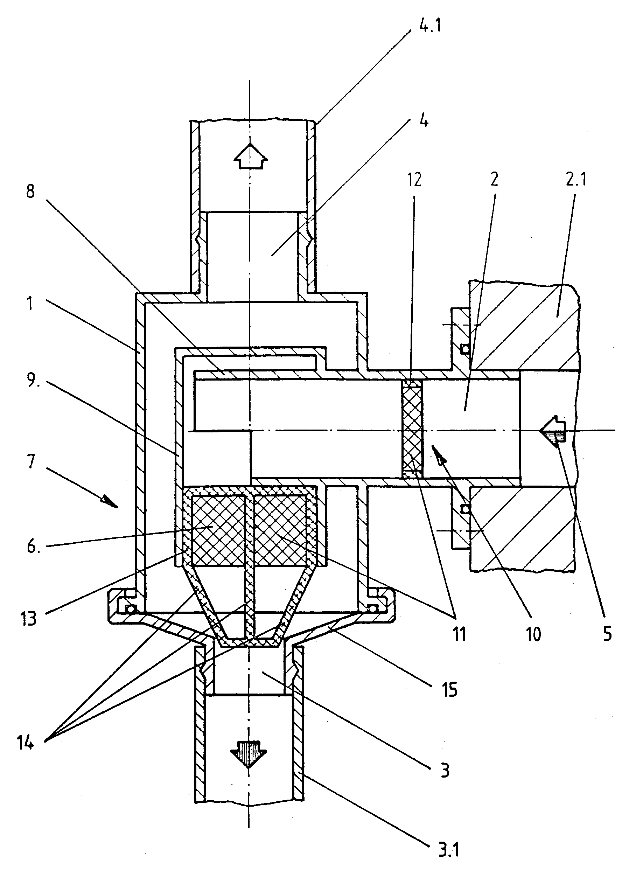

Der erfindungsgemäße Flüssigkeitsabscheider wird nachfolgend anhand der als Anlage beigefügten Zeichnung weiter erläutert. In der Figur sind die zu berücksichtigenden Einzelkomponenten des Flüssigkeitsabscheiders in geschnittener Darstellung gezeigt.

In der als Anlage beigefügten Figur ist ein Ausführungsbeispiel eines Ölabscheiders für Gase aus einem Kurbelgehäuse einer Verbrennungskraftmaschine gezeigt. Der Ölabscheider umfaßt ein Gehäuse 1, das doppelwandig ausgeführt ist. Das Mantelrohr 7 ist mit den Anschlußöffnungen versehen, wobei in diesem Beispiel eine Eintrittsöffnung 2 und zwei Austrittsöffnungen 3, 4 vorgesehen sind. Das Mantelrohr 7 umschließt das Innenrohr 8 mit allseitigem Abstand außenseitig und verringert dadurch die Vereisungsgefahr des Abscheiders. Das Mantelrohr 7 ist in diesem Ausführungsbeispiel T-förmig ausgebildet, wobei die Eintrittsöffnung 2 zum Einspeisen von mit Öl durchsetzten Gasen aus dem Kurbelgehäuse der Verbrennungskraftmaschine zwischen den Austrittsöffnungen 3, 4 angeordnet ist. Die im wesentlichen nur von abgeschiedener Flüssigkeit durchströmbare Austrittsöffnung 3 ist zur Rückführung des abgeschiedenen Öls in Strömungsrichtung 5 so angeordnet, daß die Rückführung des Öls zusätzlich von der Gravitationskraft unterstützt wird. In entgegengesetzter Richtung zweigt die Austrittsöffnung 4 ab, die im wesentlichen nur von flüssigkeitsbefreitem Gas durchströmbar ist und beispielsweise über einen flexiblen Schlauch mit einem hier nicht dargestellten Luftfilter der Verbrennungskraftmaschine verbunden ist. Das Mantelrohr 7 und das Innenrohr 8 sind als Formteil einstückig ineinander übergehend ausgebildet und bestehen aus einem zähharten, gegen das Strömungsmedium resistenten Kunststoff. Auf der der Austrittsöffnung 3 zugewandten Seite des L-förmigen Innenrohrs ist eine austauschbare Abscheidepatrone 13 angeordnet, die kegelstumpfförmig in Richtung der Austrittsöffnung 3 verjüngt ist und nur im Bereich des Innenrohrs 8 mit einem Gittergeflecht 11 versehen ist. Die Abscheidepatrone weist als Gehäuse einen durchbrochenen Käfig auf, der mit Ablaufleisten 14 in Richtung der Öl-Austrittsöffnung 3 versehen ist. Die Ablaufleisten 14 haben den Vorteil, daß das abgeschiedene Öl direkt in die Öl-Austrittsöffnung 3 gelangt. Die Gefahr eines erneuten Mitreißens des Öls durch den Luftstrom, der am Austritt aus dem Innenrohr 8 umgelenkt und durch das Mantelrohr in Richtung der Gasaustrittsöffnung 4 umgelenkt wird, kann damit herabgesetzt werden. Die Austauschbarkeit der Abscheidepatrone 13 erfolgt durch ein Abnehmen des Deckels 15, der die Öl-Austrittsöffnung 3 umfaßt. Der Deckel 15 ist in diesem Ausführungsbeispiel durch einen Schnappverschluß am Mantelrohr 7 festgelegt und gegen dieses abgedichtet. Die an die Eintrittsöffnung 2 und die Austrittsöffnungen 3, 4 anschließenden Leitungen 2.1, 3.1, 4.1 können beispielsweise durch Schnappvorrichtungen am Mantelrohr festgelegt werden, durch eine Verschraubung mit einem angrenzenden Maschinenteil oder durch eine Schlauchklemme. Die mit Öltröpfchen angereicherten Gase treten aus der Leitung 2.1 des Kurbelgehäuses in den Ölabscheider ein und passieren zunächst den Vorabscheider 10, der in die Eintrittsöffnung 2 eingeschnappt ist. Der Vorabscheider 10 besteht aus einem Gittergeflecht 11, das von einem formstabilen Haltering 12 umschlossen ist. Die Austauschbarkeit ist dadurch besonders einfach möglich.

Der erfindungemäße Flüssigkeitsabscheider ermöglicht hohe Abscheidegrade bei geringen Druckverlusten und reduziert durch den Rohr-in-Rohr-Aufbau die Vereisungsgefahr, wodurch gute Gebrauchseigenschaften auch widrigen Umgebungsbedingungen, wie beispielsweise Temperaturen von weniger als -20°C gewährleistet sind.

## Patentansprüche

1. Flüssigkeitsabscheider zum Abscheiden von Flüssigkeit aus mit Flüssigkeitsbestandteilen durchsetzten Gasen, umfassend ein Gehäuse (1) mit zumindest drei Öffnungen, wobei die Öffnungen durch eine rohrförmige Eintrittsöffnung (2) und zwei rohrförmige Austrittsöffnungen (3, 4) gebildet sind, die strömungsleitend miteinander verbunden sind, wobei in Strömungsrichtung (5) zwischen der Ein- (2) und den Austrittsöffnungen (3, 4) zumindest eine Abscheidevorrichtung (6) angeordnet ist, wobei eine der Austrittsöffnungen (3) im wesentlichen nur von abgeschiedener Flüssigkeit und die andere Austrittsöffnung (4) im wesentlichen nur von flüssigkeitsbefreitem Gas durchströmbar ist und wobei ein Mantelrohr (7) ein Innenrohr (8) mit allseitigem Abstand außenseitig umschließt, dadurch gekennzeichnet, daß die Abscheidevorrichtung (6) auf der der Austrittsöffnung (3) zugewandten Seite vom Innenrohr (8) umschlossen ist, daß das Innenrohr (8) einerseits strömungsleitend mit der Eintrittsöffnung (2) verbunden ist und andererseits der Austrittsöffnung (3) für die abgeschiedene Flüssigkeit zugeordnet ist und daß das Gehäuse (1) mit der Eintrittsöffnung (2) und den Austrittsöffnungen (3, 4) als Mantelrohr (7) ausgebildet ist.

2. Flüssigkeitsabscheider nach Anspruch 1, dadurch gekennzeichnet, daß das Mantelrohr (7) im wesentlichen T-förmig gestaltet ist und daß die Eintrittsöffnung (2) zwischen einander gegenüberliegenden Austrittsöffnungen (3, 4) angeordnet ist.

3. Flüssigkeitsabscheider nach Anspruch 1, dadurch gekennzeichnet, daß das Innenrohr (8) im wesentlichen L-förmig gestaltet und als Prallwand (9) ausgebildet ist.

4. Flüssigkeitsabscheider nach Anspruch 1 bis 3, dadurch gekennzeichnet, daß das Mantelrohr (7) und das Innenrohr (8) als einstückig eineinander übergehendes Formteil ausgebildet sind, das aus einem zähharten, gegen das Strömungsmedium resistenten Kunststoff besteht.

5. Flüssigkeitsabscheider nach Anspruch 1 bis 4, dadurch gekennzeichnet, daß die Eintrittsöffnung (2) und die Austrittsöffnungen (3, 4) als Befestigungsflansche ausgebildet und mit anschließenden Leitungen (2.1; 3.1; 4.1) dichtend in Eingriff bringbar sind.

6. Flüssigkeitsabscheider nach Anspruch 1 bis 5, dadurch gekennzeichnet, daß im Bereich der Eintrittsöffnung (2) ein Vorabscheider (10) angeordnet ist, der aus einem strömungsdurchlässigen Gittergeflecht (11) besteht, das von einem Haltering (12) umschlossen ist und den Eintrittsquerschnitt vollständig überdeckt und daß der Haltering (12) in die Eintrittsöffnung (2) einschnappbar ist.

7. Flüssigkeitsabscheider nach Anspruch 1 bis 6, dadurch gekennzeichnet, daß das Innenrohr (8) auf der der Austrittsöffnung (3) zugewandten Seite eine austauschbare Abscheidepatrone (13) kraft- und/oder formschlüssig umschließt und daß die Abscheidepatrone (13) durch einen durchbrochenen Käfig gebildet ist, der ein strömungsdurchlässiges Gittergeflecht (11) umgreift.

8. Flüssigkeitsabscheider nach Anspruch 6 bis 7, dadurch gekennzeichnet, daß das Gittergeflecht (11) durch einen metallischen Werkstoff gebildet ist, der einen Filtervliesstoff umschließt.

9. Flüssigkeitsabscheider nach Anspruch 7 bis 8, dadurch gekennzeichnet, daß die Abscheidepatrone (13) das Innenrohr (8) in Richtung der Austrittsöffnung (3) kegelstumpfförmig überragt und daß der Käfig in diesem Bereich durch Flüssigkeitsleitschienen (14) gebildet ist.

10. Flüssigkeitsabscheider nach Anspruch 7 bis 9, dadurch gekennzeichnet, daß die Austrittsöffnung (3) einstückig mit einem Deckel (15) ausgebildet ist und daß der Deckel dichtend am Mantelrohr (7) befestigbar ist.

11. Flüssigkeitsabscheider nach Anspruch 10, dadurch gekennzeichnet, daß der Deckel (15) am Mantelrohr (7) einschnappbar ist.

12. Flüssigkeitsabscheider nach einem der Ansprüche 7 bis 11, dadurch gekennzeichnet, daß die der Abscheidepatrone (13) zugewandte Austrittsöffnung (3) als Leitungsanschluß für eine in den Ölsumpf der Verbrennungskraftmaschine führende Öl-Rückführungsleitung und die im wesentlichen nur von flüssigkeitsbefreitem Gas durchströmte Austrittsöffnung (4) als Leitungsanschluß für eine in den Luftfilter der VerBrennungskraftmaschine führende Gas- Rückführungsleitung ausgebildet ist.

13. Verwendung des Flüssigkeitsabscheider nach einem der Ansprüche 1 bis 11, als Ölabscheider für Verbrennungskraftmaschinen.

## Claims

1. A liquid separator for separating liquid from gases containing liquid constituents, comprising a housing (1) with at least three openings, the openings being formed by a tubular inlet opening (2) and two tubular outlet openings (3, 4), which are connected to one another in a manner which allows flow, at least one separating device (6) being arranged between the inlet opening (2) and the outlet openings (3, 4) in the direction of flow (5), essentially only separated liquid being able to flow through one of the outlet openings (3) and essentially only gas freed from liquid being able to flow through the other outlet opening (4), and a jacket tube (7) surrounding an inner tube (8) on the outside with a clearance on all sides, characterized in that, at the end remote from the outlet opening (3), the separating device (6) is surrounded by the inner tube (8), in that, at one end, the inner tube (8) is connected to the inlet opening (2) in a manner which allows flow and, at the other end, is associated with the outlet opening (3) for the separated liquid, and in that, with the inlet opening (2) and the outlet openings (3, 4), the housing (1) is designed as a jacket tube (7).

2. A liquid separator according to claim 1, characterized in that the jacket tube (7) is of essentially T-shaped configuration and in that the inlet opening (2) is arranged between outlet openings (3, 4) situated opposite one another.

3. A liquid separator according to claim 1, characterized in that the inner tube (8) is of essentially L-shaped configuration and is designed as a baffle wall (9).

4. A liquid separator according to any of claims 1 to 3, characterized in that the jacket tube (7) and the inner tube (8) are designed in such a way as to merge into one another as an integral moulding which is composed of a tough and hard plastic resistant to the flowing medium.

5. A liquid separator according to any of claims 1 to 4, characterized in that the inlet opening (2) and the outlet openings (3, 4) are designed as fixing flanges and can be brought into engagement in a sealing manner with adjoining conduits (2.1; 3.1; 4.1).

6. A liquid separator according to any of claims 1 to 5, characterized in that a preliminary separator (10) is arranged in the region of the inlet opening (2), the said preliminary separator comprising a braided lattice (11) through which the medium can flow, which is surrounded by a holding ring (12) and which completely covers the inlet cross-section, and in that the holding ring (12) can be snapped into the inlet opening (2).

7. A liquid separator according to any of claims 1 to 6, characterized in that, at the end nearest the outlet opening (3), the inner tube (8) surrounds an exchangeable separating cartridge (13) with nonpositive and/or positive engagement and in that the separating cartridge (13) is formed by a pierced cage which surrounds a braided lattice (11) through which flow can take place.

8. A liquid separator according to either of claims 6 and 7, characterized in that the braided lattice (11) is formed by a metallic material which surrounds a filter nonwoven.

9. A liquid separator according to either of claims 7 and 8, characterized in that the separating cartridge (13) projects beyond the inner tube (8) in the form of a truncated cone in the direction of the outlet opening (3) and in that, in this region, the cage is formed by liquid guide rails (14).

10. A liquid separator according to any of claims 7 to 9, characterized in that the outlet opening (3) is of integral construction with a cover (15) and in that the cover can be fastened in a sealing manner on the jacket tube (7).

11. A liquid separator according to claim 10, characterized in that the cover (15) can be snapped in on the jacket tube (7).

12. A liquid separator according to any of claims 7 to 11, characterized in that the outlet opening (3) nearest the separating cartridge (13) is designed as a conduit connection for an oil return conduit leading into the oil sump of the internal combustion engine, and the outlet opening (4) through which essentially only gas freed from liquid flows is designed as a conduit connection for a gas return line leading into the air filter of the internal combustion engine.

13. The use of the liquid separator according to any of claims 1 to 11 as an oil separator for internal combustion engines.

## Revendications

1. Séparateur de liquide destiné à la séparation de liquide constitué de gaz chargés de composants liquides, comprenant un carter (1) doté d'au moins trois orifices, ces orifices étant constitués d'un orifice d'entrée en forme de tube (2) et de deux orifices de sortie en forme de tube (3,4) reliés les uns aux autres de façon à guider le flux, un dispositif de séparation (6) au moins étant monté dans le sens du flux (5) entre l'orifice d'entrée (2) et les orifices de sortie (3,4), l'un des orifices de sortie (3) ne pouvant être traversé essentiellement que par du liquide séparé et l'autre orifice de sortie (4) ne pouvant être traversé essentiellement que par du gaz libéré de liquide et un tube de protection (7) enrobant tout le périmètre extérieur d'un tube intérieur (8) à une certaine distance, caractérisé en ce que le dispositif de séparation (6) est entouré par le tube intérieur (8) du côté orienté vers l'orifice de sortie (3),
en ce que d'une part le tube intérieur (8) est relié d'un côté de façon à guider le flux à l'orifice d'entrée (2) et en ce que d'autre part l'orifice de sortie (3) est assigné au liquide séparé et
en ce que le carter (1) doté de l'orifice d'entrée (2) et des orifices de sortie (3,4) est réalisé en tant que tube de protection (7).

2. Séparateur de liquide selon la revendication 1, caractérisé en ce que le tube de protection (7) est essentiellement réalisé en forme de T et
en ce que l'orifice d'entrée (2) est disposé entre les orifices de sortie (3,4) situés l'un en face de l'autre.

3. Séparateur de liquide selon la revendication 1 caractérisé en ce que le tube intérieur (8) est essentiellement réalisé en forme de L et fait office de paroi de rebondissement.

4. Séparateur de liquide selon l'une quelconque des revendications 1 à 3, caractérisé en ce que le tube de protection (7) et le tube intérieur (8) sont réalisés en tant que pièce montée en un seul morceau constituée d'une matière plastique résiliente résistante au milieu de flux.

5. Séparateur de liquide selon l'une quelconque des revendications 1 à 4, caractérisé en ce que l'orifice d'entrée (2) et les orifices de sortie (3,4) sont réalisés en tant que bride de fixation et peuvent être connectés d'une manière étanche aux conduites contiguës (2.1,3.1,4.1).

6. Séparateur de liquide selon l'une quelconque des revendications 1 à 5, caractérisé en ce qu'un préséparateur (10) est disposé dans la zone de l'orifice d'entrée (2) qui est constitué d'une grille laissant passer le flux (11), entourée d'une bague de fixation (12) et recouvrant entièrement la section d'entrée et
en ce que la bague de fixation (12) peut s'enclencher dans l'orifice d'entrée (2).

7. Séparateur de liquide selon l'une quelconque des revendications 1 à 6, caractérisé en ce que le tube intérieur (8) entoure par force et/ou par blocage une cartouche de séparation (13) remplaçable du côté orienté vers l'orifice de sortie (3) et
en ce que la cartouche de séparation (13) est constituée d'une cage perforée qui enveloppe une grille laissant passer le flux (11).

8. Séparateur de liquide selon l'une quelconque des revendications 6 à 7, caractérisé en ce que la grille (11) est constituée d'un matériau métallique qui entoure un non-tissé de filtrage.

9. Séparateur de liquide selon l'une quelconque des revendications 7 à 8, caractérisé en ce que la cartouche de séparation (13) dépasse en forme tronconique le tube intérieur (8) en direction de l'orifice de sortie (3) et en ce que dans cette zone, la cage est constituée de rails conducteurs de liquide (14).

10. Séparateur de liquide selon l'une quelconque des revendications 7 à 9, caractérisé en ce que l'orifice de sortie (3) est réalisé en une seule pièce avec un couvercle (15) et en ce que le couvercle peut être fixé de façon étanche au tube de protection (7).

11. Séparateur de liquide selon la revendication 10, caractérisé en ce que le couvercle (15) peut s'enclencher au tube de protection (7).

12. Séparateur de liquide selon l'une quelconque des revendications 7 à 11, caractérisé en ce que l'orifice de sortie (3) orienté vers la cartouche de séparation (13) est réalisé en tant que raccord pour une conduite d'huile menant au carter à huile de la machine à combustion interne et
en ce que l'orifice de sortie (3) n'étant essentiellement traversé que par du gaz libéré de liquide est réalisé en tant que raccord pour une conduite de retour de gaz menant au filtre à air de la machine à combustion interne.

13. Utilisation du séparateur de liquide selon l'une quelconque des revendications 1 à 11 en tant que séparateur d'huile pour machines à combustion interne.
